# EUROPEAN PATENT SPECIFICATION

(11) **EP 2 643 175 B1**
(45) Date of publication and mention of the grant of the patent: **07.01.2015**
(21) Application number: 12799642.9
(22) Date of filing: 14.11.2012
(51) Int. Cl.: B60D 1/02, B60D 1/00, B60D 1/54

(54) **ATTACHMENT DEVICE FOR TRAILER TOW BAR**
BEFESTIGUNGSVORRICHTUNG FÜR EINE ANHÄNGERDEICHSEL
DISPOSITIF DE FIXATION D'UN TIMON DE REMORQUE

(30) Priority: 17.11.2011 IT VR20110204
(43) Date of publication of application: 02.10.2013
(73) Proprietor: Appoloni, Omar, 38070 Trento (IT)
(72) Inventor: Appoloni, Omar, 38070 Trento (IT)
(74) Representative: Lissandrini, Marco
(86) International application number: PCT/IB2012/056403
(87) International publication number: WO 2013/072854

(56) References cited:
- WO-A1-2010/105286
- FR-A- 1 194 652
- GB-A- 2 249 532
- US-A- 2 221 278
- US-A1- 2009 302 573
- US-A1- 2011 248 474
- US-B1- 7 988 179

## Description

### Technical field

This invention relates to an attachment device for the trailer tow bar.

More specifically, this invention relates to an attachment device equipped with at least one joint, which allows a trailer to be connected to a motor vehicle.

It should be noted that this invention can be used in any environment and for pulling any type of trailer. However, the device according to this invention is applicable in particular in the field of agricultural vehicles and of operating trailers for agricultural works.

### Background art

As is known, the attachment devices for trailer tow bars, commonly known as "steering drawbars", comprise a cylindrical supporting body inside of which a respective pin slides. The sliding of the pin inside the supporting body is normally controlled by a hydraulic actuator. In this way, the pin can be moved to a first position in which it is completely extracted from the supporting body, and a second position in which it is withdrawn almost completely inside the body. A socket is made at the outer end of the pin designed to be connected to a bell of a motor vehicle, that is to say, a hook positioned at the rear of the vehicle. The socket therefore forms a first joint of rotation about a vertical axis which allows steering of the trailer after steering of the vehicle. The pin is also mounted rotatably in the body so as to be able to rotate freely about a respective longitudinal axis corresponding to the direction of travel of the vehicle.

In this way, the pin also allows a rotation of the trailer relative to the vehicle about the above-mentioned longitudinal axis for allowing any lateral movements. In effect, especially on uneven surfaces such as agricultural fields, the vehicle undergoes lateral oscillations during its travel which define a rolling of the vehicle. In this context, it is necessary to allow a rotation of the trailer relative to the vehicle also about the longitudinal axis, to prevent a twisting of the mechanical connecting components. Moreover, the highway regulations require this rotational movement for guaranteeing the stability of the vehicle also following any lateral overturning of the vehicle.

The supporting body also has a second connecting joint, positioned opposite the above-mentioned pin and rotatably connected to the trailer.

This second joint allows the rotation about a second vertical axis parallel to the first axis and close to the trailer. In effect, to make the manoeuvres easier in particularly narrow environments such as, for example, between the rows of vineyards, it is necessary to transfer the steering point closer to the trailer than to the motor vehicle.

For this reason, the supporting body is made to slide until the pin is moved in the two positions for allowing or locking the rotation (corresponding to the steering of the vehicle) at the first or at the second joint.

In more detail, a pair of bars positioned on opposite sides and extending along the longitudinal extension of the body are engaged on the outer surface of the cylindrical supporting body.

Each bar has a first end facing towards the motor vehicle and a second end facing towards the trailer. In this way, when the pin is extracted in the first position, the first ends of the bars are moved away from the vehicle, whilst the second ends are in contact on the trailer. Consequently, the bars prevent the rotation of the trailer about the second joint.

When, on the other hand, the pin is in the second withdrawn position, the first ends of the bars are in contact with the vehicle whilst the second ends are moved away from the trailer. In this case, the bars prevent the rotation of the vehicle about the first vertical axis of the first joint, compromising also the rotation of the pin about the longitudinal axis.

For this reason, the device can be switched to two operating conditions, one corresponding to the operating condition for movement on roads wherein the rotation of the steering is applied close to the motor vehicle, and one corresponding to the operating condition for movement on agricultural fields wherein the rotation of the steering is applied close to the trailer.

However, the prior art devices described briefly above have an important drawback.

This drawback is due mainly to the condition of pulling in agricultural fields and therefore on uneven surfaces wherein, as well as the lateral oscillations of the vehicle (rolling), there is a forward and backward inclination of the front and/or rear of the vehicle and of the trailer (pitching). In effect, in this condition the device does not allow the rotation about an axis horizontal and transversal to the direction of travel of the vehicle. For this reason, in the conditions of use of the device on fields or particularly undulating roads, the pitching and rolling movement is transmitted rigidly from the attachment device with the consequent damage and/or failure of of the mechanical connecting components. An example of an attachment device disclosing the preamble of claim 1 is shown in WO 2010/105286A1.

### Aim of the invention

In this context, the aim of this invention is to provide an attachment device for the trailer tow bar which is free of the above mentioned drawback. More specifically, the aim of this invention is to provide an attachment device for the trailer tow bar which is reliable and can be used in any ground conditions on which the motor vehicle and the trailer travel.

Yet more specifically, the aim of this invention is to provide an attachment device for the trailer tow bar which is able to allow any type of movement (pitching, rolling, steering) of the vehicle relative to the trailer and vice versa.

The technical purpose indicated and the aim specified are substantially achieved by an attachment device for the trailer tow bar with the technical features described in one or more of the appended claims.

### Brief description of the drawings

Further features and advantages of the invention are more apparent in the non-limiting description which follows of a preferred embodiment of an attachment device for the trailer tow bar as illustrated in the accompanying drawings, in which:
- Figure 1 is a perspective view of an attachment device for the trailer tow bar in accordance with this invention;
- Figure 2 is a perspective view of the device of Figure 1 in a first operating condition;
- Figure 3 is a perspective view of the device of Figure 1 in a second operating condition;
- Figure 4 is a longitudinal cross-section along line II-II of the device of Figure 2;
- Figure 5 is a longitudinal cross-section along line III-III of the device of Figure 3;
- Figure 6 is a side elevation view of a construction detail of the device according to this invention.

### Detailed description of the preferred embodiments of the invention

With reference to the accompanying drawings, the numeral 1 denotes in its entirety an attachment device for the trailer tow bar according to this invention.

The attachment device can be used for motor vehicles and trailers of any type, mainly of the industrial type.

Advantageously, the device 1 is applicable in particular for agricultural use, for vehicles such as tractors and for the transport of operating trailers such as, for example, irrigators and the like.

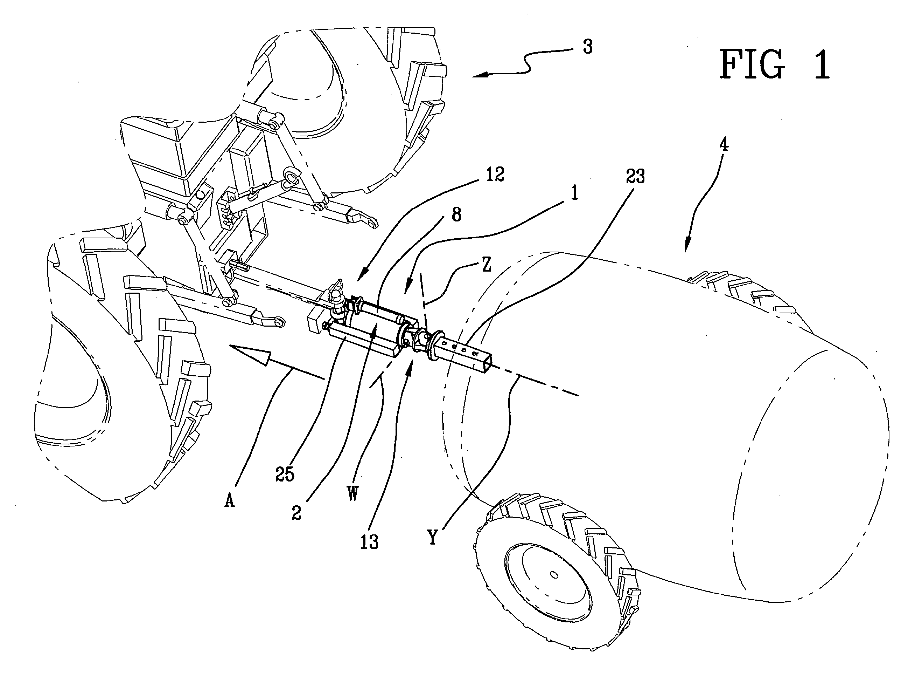

With reference in particular to Figure 1, the device 1 has a supporting body 2 interposed between a vehicle 3 and a trailer 4 which are only schematically illustrated since they do not form part of this invention.

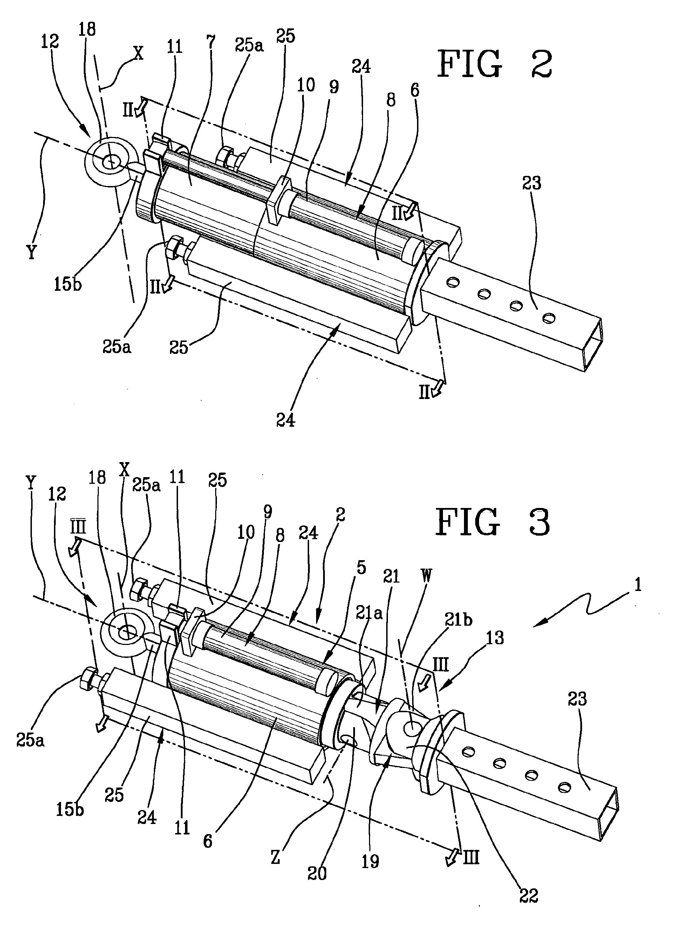

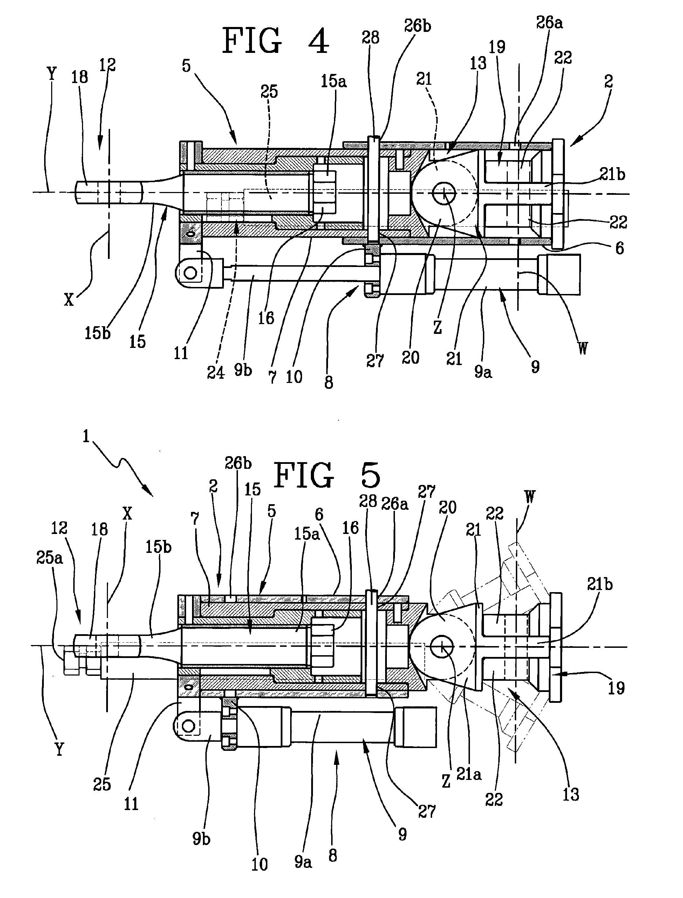

The supporting body 2 comprises a cylindrical body 5, which is internally hollow and formed by a first and a second tubular portion 6, 7. As illustrated in more detail in Figures 4 and 5, the two tubular portions 6, 7 are coupled telescopically with each other for sliding inside each other. In this way, the tubular portions 6, 7 are moveable between a position of maximum extension (Figures 2 and 4), and a withdrawn position (Figures 3 and 5) wherein the second portion 7 is inside the first tubular portion 6. The axial sliding of the tubular portions 6, 7 is imparted by moving means 8 preferably comprising a fluid dynamic actuator 9. The fluid dynamic actuator, such as, for example, a hydraulic cylinder, has a fixed element 9a (cylinder) rigidly engaged on the outer surface of the first tubular portion 6 using a connection flange 10. A mobile element 9b (piston) slides inside the fixed element 9a along the longitudinal extension of the cylindrical body 5. The mobile element 9b is connected to a connection flange 11 associated with an outer end of the of the second tubular portion 7. The connection flange 11 is in turn integrally connected, for example by bolting or welding, to a bushing 14, which will be described in more detail below.

In this way, following the command of the fluid dynamic actuator 9, the mobile element 9b slides in the fixed element 9a moving the second tubular portion 7 inside the first portion 6 in the completely extracted (Figure 4) and withdrawn (Figure 5) positions, respectively.

The device 1 also comprises a first connecting joint 12 associated with the cylindrical body 5 which can be engaged on the vehicle 3 using attachment systems of known type and therefore not described in detail. On the opposite side of the first joint 12 there is also a second connecting joint 13 associated with the cylindrical body 5 which can be engaged on the trailer 4 using attachment systems of known type and therefore not described in detail.

The first joint 12 rotates about a first vertical axis "X" extending transversally to the supporting surface of the vehicle 3. The rotation of the first joint 12 therefore allows the vehicle 3 to be steered during the pulling of the trailer 4.

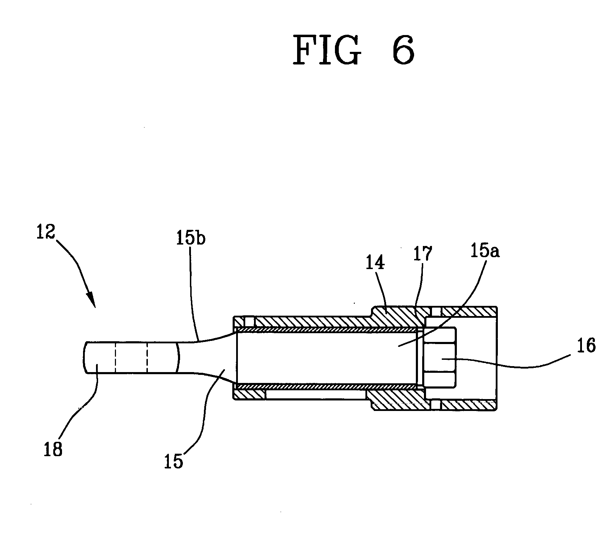

Advantageously, the first joint 12 also rotates about a longitudinal axis "Y" parallel to the direction of movement "A" of the vehicle 3 (Figure 1). In other words, the joint 12 not only guarantees the steering motion of the vehicle 3 relative to the trailer 4 but also allows a rolling movement due to the lateral oscillations of the vehicle 3 relative to the trailer 4, in both the operating modes shown in Figures 2 and 3, that is to say, both in the maximum extension configuration and in the withdrawn configuration. More in detail, the first joint 12 comprises a bushing 14 illustrated in more detail in Figure 6. The bushing 14 is hollow and has a substantially cylindrical shape. With reference to the cross-section views in Figures 4 and 5, it should be noted that the bushing 14 is inserted in the second tubular portion 7 of the cylindrical body 5 and is rotatable relative to the tubular portion 7.

Inside the bushing 14 there is a pin 15 rotatable relative to the bushing 14 for autonomously rotating about the above-mentioned longitudinal axis "Y". In effect, it should be noted that the pin 15 has a first end 15a for coupling with the bushing 14 to which a nut 16 is associated. The nut 16 is in contact on an undercut 17 (Figure 6) made inside the bushing 14 for holding the pin 15 inside the bushing 14 and making possible the rotation inside the bushing 14 during rotation about the longitudinal axis "Y".

The pin 15 also has a second end 15b opposite the first end 15a, and positioned outside the bushing 14.

The second end 15b of the pin 15 has an annular element 18 designed to be coupled with a hook (not illustrated) of the vehicle 3. The hook is inserted in the annular element 18 for rotating inside during the steering of the vehicle 3. In this way, the annular element 18 and, therefore, the entire first joint 12 are rotatable about the above-mentioned first vertical axis "X". The second connecting joint 13 advantageously comprises an articulated joint rotating at least about a horizontal axis "Z" extending parallel to the supporting plane of the vehicle 3 and of the trailer 4 and transversally to the above-mentioned direction of movement "A".

In other words, the second joint 13 allows the pitching movement due to the forward and backward inclinations of the front and/or rear part of the vehicle 3 relative to the trailer 4.

Advantageously, the second joint 13 also rotates about a second vertical axis "W" parallel to the first vertical axis "X".

In this way, the second joint 13 allows a further steering movement defined about the axis "W" close to the trailer 4, unlike the first axis "X" close to the trailer 3 as described in more detail below.

Preferably, the second joint 13 is a cardan joint 19.

More specifically, the cardan joint 19 has a first pair of perforated and parallel plates 20 , both rigidly connected to an end of the second tubular portion 7 positioned inside the first tubular portion 6.

The plates 20 are rotatably connected about the horizontal axis "Z" to a connecting portion 21. The connecting portion 21 has a first plate 21 a positioned between the plates 20 and a second plate 21b opposite the first plate 21a, and extending perpendicularly to the planar surface of the first plate 21a.

The second plate 21b is in turn rotatably coupled between a second pair of perforated and parallel plates 22, both rigidly connected to a connecting rod 23. In this way, the coupling between the first pair of plates 20 and the first plate 21a determines the rotation of the second joint 13 about the horizontal axis "Z", whilst the coupling between the second pair of plates 22 and the second plate 21b determines the rotation of the second joint 13 about the second vertical axis "W".

The connecting rod 23 is only illustrated schematically and it is designed for engaging with the trailer 4 using coupling means which are known and are not described.

Advantageously, the moving means 8 are active for switching the supporting body 2 between a first operating condition (Figures 2 and 4) wherein the first joint 12 may rotate about the relative axes "X, Y" and the second joint 13 is locked so as not to rotate, and a second operating condition (Figures 3 and 5) wherein the first joint 12 may only rotate about the horizontal axis "Y" and the second joint 13 may rotate about the relative axes "Z, W".

More specifically, it should be noted that the first operating condition corresponds to the position of maximum extension of the tubular portions 6, 7. In this condition, the second joint 13 is positioned inside the first tubular portion 6 which is fitted on the second joint 13. In this way, the second joint 13 is locked inside the cylindrical body 5 for preventing every rotation about the horizontal axis "Z" and about the second vertical axis "W".

The second operating condition corresponds, on the other hand, to the withdrawn position of the portions 6, 7. In this case, the second tubular portion 7 is inside the first tubular portion 6 and the second joint 13 is outside the cylindrical body 5. In this case, the second joint 13 is free to rotate about the respective axes "Z, W".

It should be noted that on the first tubular portion 6 there is a pair of through holes 26a, 26b, spaced apart from each other and positioned towards the ends of the tubular portion. Depending on the configuration adopted by the first tubular portion 6 - maximum extension configuration or completely withdrawn - only one of the through holes is aligned with the corresponding through holes 27 present on the second tubular portion 7. Advantageously, the alignment between the through holes made on the tubular portion forms a passage for inserting a safety pin 28. Even more advantageously, the presence of the pair of through holes 26a, 26b on the first tubular portion 6 allows the safety pin 28 to be always inserted in the same position of the device, that is, at the through holes made on the second tubular portion 7, irrespective of whether the first tubular portion 6 is in the withdrawn or maximum extension configuration.

The device also comprises a stopping element 24 engaged on the outer surface of the cylindrical body 5 and designed to come into contact with the rear portion of the vehicle 3 in the above-mentioned operating condition.

In effect, in this condition the stopping element 24 prevents the rotation of the first joint 12 about the above-mentioned first vertical axis "X". Preferably, the stopping element 24 has a pair of bars (25) connected on opposite ends of the first tubular portion 6 and extending along the longitudinal extension of the cylindrical body 5.

Each bar 25 has a a contact end 25a facing towards the vehicle 3, for interfering with the vehicle 3 in the above-mentioned second operating condition.

In effect, the first joint 12 in the first operating condition is moved away from the bars 25 for spacing the contact ends 25a from the vehicle 3 (Figure 4). On the other hand, in the second operating condition, the first joint 12 is withdrawn and moved close to the bars 25 for positioning the contact ends 25a in contact with the rear portion of the vehicle 3 (Figures 1 and 5). In this way, the two bars 25 prevent the rotation of the first joint 12 about the first vertical axis "X".

Advantageously, the device 1 is switched to two different operating conditions depending on the type of ground on which the vehicle 3 and the respective trailer 4 travel.

In effect, on roads with a regular surface, such as, for example, paved roads, the device 1 is switched to the corresponding first operating position. In this case, the second joint 13 is locked inside the first tubular portion 6, whilst the first joint 12 allows the steering movements about the first axis "X" and rolling movements about the longitudinal axis "Y". When, on the other hand, the vehicle 3 must travel on uneven surfaces, such as, for example, agricultural fields, the fluid dynamic actuator 9 is activated for withdrawing the second tubular portion 7 inside the first tubular portion 6. In this case, the device is switched to the second operating condition in which the bars 25 prevent the rotation of the first joint about the "X" axis, but the rolling about the "Y" axis is, however, allowed as required by the current highway regulations.

In this situation, shown by way of an example in Figure 1, the second joint 13 is positioned outside the first tubular portion 6 for allowing the driving about the second vertical "Z" and the pitching about the horizontal axis "W".

Advantageously, the position of the second vertical axis "Z" close to the trailer 4 makes the steering in particularly narrow environments easier, as, for example, between the rows of vineyards. Moreover, the possibility of moving the vehicle 3 and the trailer 4 according to a pitching motion (rotation about the horizontal axis "W") guarantees a greater stability and reliability of the attachment device1.

In effect, in the case of agricultural fields, or on particularly undulating ground, the inclination of the vehicle relative to the trailer and vice versa, is guaranteed by the articulated joint formed by the second cardan joint 13. For this reason, the device does not risk being damaged and can be used for any type of ground, thus increasing the safety for the users. In effect, thanks to the possibility of rotating about the longitudinal axis "Y", the trailer, in the case of overturning, does not pull with it the vehicle.

## Claims

1. An attachment device for the trailer tow bar, comprising:
- a first connecting joint (12) which can be associated with a vehicle (3), the first joint (12) rotating about a first vertical axis (X) extending transversally to the supporting surface of the vehicle (3) and also about a longitudinal axis (Y) parallel to the direction of movement (A) of the vehicle (3);
- a second connecting joint (13) opposite the first joint (12) and associable with a trailer (4);
- a supporting body (2) positioned between and associated with the first and second joint (12, 13);
the second connecting joint (13) being an articulated joint rotating about a horizontal axis (Z) extending parallel to the supporting plane of the vehicle (3) and of the trailer (4) and transversally to the direction of movement (A) of the vehicle (3); the second connecting joint (13) also rotating about a second vertical axis (W) parallel to the first vertical axis (X),
**characterised in that** the supporting body (2) has moving means (8) for switching the body (2) between a first operating condition wherein the first joint (12) may rotate about the relative axes (X, Y) and the second joint (13) is locked so as not to rotate, and a second operating condition wherein the first joint (12) may only rotate about the horizontal axis (Y) and the second joint (13) may rotate about the relative axes (Z, W).

2. The device according to claim 1, **characterised in that** the second joint (13) is a cardan joint.

3. The device according to claim 1, **characterised in that** the supporting body (2) comprises an internally hollow cylindrical body (5); the second joint (13) being inserted inside the cylindrical body (5) in the first operating condition and being positioned outside the cylindrical body (5) in the second operating condition.

4. The device according to claim 3, **characterised in that** the cylindrical body (5) has a first and a second tubular portion (6, 7), coupled telescopically with each other and reciprocally slidable between a position of maximum extension corresponding to the first operating position and wherein the first portion (6) is fitted on the second joint (13), and a withdrawn position corresponding with the second operating condition and wherein the second portion (7) is inside the first tubular portion (6).

5. The device according to claim 4, **characterised in that** moving means (8) comprise a fluid dynamic actuator (9) having a fixed element (9a) associated with the first tubular portion (6) and a mobile element (9b) slidable axially along the longitudinal extension of the cylindrical body (5) and associated with the second tubular portion (7), at an outer end.

6. The device according to claim 4 or 5, **characterised in that** it also comprises a stopping element (24) engaged externally to the cylindrical body (5), the stopping element (24) in the second operating condition being in contact with the vehicle (3) to prevent rotation of the first joint (12) about the first vertical axis (X).

7. The device according to claim 6, **characterised in that** the stopping element (24) comprises a pair of bars (25) connected on opposite ends of the first tubular portion (6) and each of which has a contact end (25a), for interfering with the vehicle (3) in the second operating condition of the supporting body (2); the first joint (12) in the first operating condition of the supporting body (2) being moved away from the bars (25).

8. The device according to any of the foregoing claims from 4 to 7, **characterised in that** the first joint (12) comprises:
a bushing (14) rotatably inserted in the second tubular portion (7) of the cylindrical body (5);
a pin (15) rotatably inserted in the bushing (14) for rotating about the longitudinal axis (Y), the pin (15) having a first end (15a) for coupling with the bushing (14) and a second end (15b) opposite the first end (15a) and positioned outside the bushing (14); and
an annular element (18) associated with the second end (15b) of the pin (15) which can be coupled to a hook of a vehicle (3) for allowing the rotation about the first vertical axis (X).

9. The device according to any of the foregoing claims from 7 to 11, **characterised in that** the second joint (13) comprises a first portion connected to an end of the second tubular portion (7) opposite the first joint (12), and a second portion opposite the first and having a rod (24) which may be coupled with the trailer (4).

## Patentansprüche

1. Befestigungsvorrichtung für eine Anhängerdeichsel, umfassend:
- ein erstes Verbindungsanschlussstück (12), das mit einem Fahrzeug (3) verbunden werden kann, wobei sich das erste Anschlussstück (12) um eine erste vertikale Achse (X) dreht, die sich quer zur Tragefläche des Fahrzeugs (3) erstreckt, sowie auch um eine Längsachse (Y), die parallel zur Bewegungsrichtung (A) des Fahrzeugs (3) verläuft;
- ein zweites Verbindungsanschlussstück (13), das entgegengesetzt zum ersten Anschlussstück (12) angeordnet ist und mit einem Anhänger (4) verbunden werden kann;
- einen Trägerkörper (2), der zwischen dem ersten und dem zweiten Anschlussstück (12, 13) angeordnet und mit diesen verbunden ist;
wobei es sich beim zweiten Verbindungsanschlussstück (13) um ein gelenkiges Anschlussstück handelt, das sich um eine horizontale Achse (Z) dreht, die sich parallel zur Trägerfläche des Fahrzeugs (3) und des Anhängers (4) und quer zur Bewegungsrichtung (A) des Fahrzeugs (3) erstreckt, wobei das zweite Verbindungsanschlussstück (13) sich auch um eine zweite vertikale Achse (W) dreht, die parallel zur ersten vertikalen Achse (X) angeordnet ist,
**dadurch gekennzeichnet, dass** der Trägerkörper (2) Bewegungsmittel (8) zum Umstellen des Körpers (2) zwischen einem ersten Betriebszustand, in dem sich das erste Anschlussstück (12) um die entsprechenden Achsen (X, Y) drehen kann und das zweite Anschlussstück (13) verriegelt ist, sodass es sich nicht drehen kann, und einem zweiten Betriebszustand, in dem sich das erste Anschlussstück (12) nur um die horizontale Achse (Y) drehen kann und sich das zweite Anschlussstück (13) um die entsprechenden Achsen (Z, W) drehen kann.

2. Vorrichtung nach Anspruch 1, **dadurch gekennzeichnet, dass** das zweite Anschlussstück (13) ein Kardangelenk ist.

3. Vorrichtung nach Anspruch 1, **dadurch gekennzeichnet, dass** der Trägerkörper (2) einen zylindrischen Körper (5) umfasst, der innen hohl ist, wobei das zweite Anschlussstück (13) im ersten Betriebszustand in den zylindrischen Körper (5) eingesetzt und im zweiten Betriebszustand außerhalb des zylindrischen Körpers (5) angeordnet wird.

4. Vorrichtung nach Anspruch 3, **dadurch gekennzeichnet, dass** der zylindrische Körper (5) einen ersten und einen zweiten Rohrabschnitt (6, 7) aufweist, die teleskopisch miteinander gekoppelt sind und gegenseitig zwischen einer maximal ausgefahrenen Position, entsprechend dem ersten Betriebszustand, wobei der erste Abschnitt (6) am zweiten Anschlussstück (13) befestigt ist, und einer eingefahrenen Position, entsprechend dem zweiten Betriebszustand, wobei der zweite Abschnitt (7) in den ersten Rohrabschnitt (6) eingesetzt ist, verschiebbar sind.

5. Vorrichtung nach Anspruch 4, **dadurch gekennzeichnet, dass** die Bewegungsmittel (8) einen fluiddynamischen Stellantrieb (9) umfassen, aufweisend ein fixiertes Element (9a), verbunden mit dem ersten Rohrabschnitt (6), und ein mobiles Element (9b), verschiebbar axial entlang der Längsausdehnung des zylindrischen Körpers (5) und verbunden mit dem zweiten Rohrabschnitt (7) an einem äußeren Ende.

6. Vorrichtung nach Anspruch 4 oder 5, **dadurch gekennzeichnet, dass** sie auch ein Stoppelement (24) umfasst, das extern mit dem zylindrischen Körper (5) im Eingriff ist, wobei das Stoppelement (24) im zweiten Betriebszustand mit dem Fahrzeug (3) in Kontakt ist, um die Drehung des ersten Anschlussstücks (12) um die erste vertikale Achse (X) zu verhindern.

7. Vorrichtung nach Anspruch 6, **dadurch gekennzeichnet, dass** das Stoppelement (24) ein Paar Stäbe (25) umfasst, die an entgegengesetzten Enden des ersten Rohrabschnitts (6) angeschlossen sind und von denen jeder ein Kontaktende (25a) aufweist, um mit dem Fahrzeug (3) im zweiten Betriebszustand des Trägerkörpers (2) zu interferieren, wobei das erste Anschlussstück (12) im ersten Betriebszustand des Trägerkörpers (2) von den Stäben (25) wegführend bewegt wird.

8. Vorrichtung nach einem der vorhergehenden Ansprüche 4 bis 7, **dadurch gekennzeichnet, dass** das erste Anschlussstück (12) umfasst:
eine Lagerbuchse (14), die drehbar in den zweiten Rohrabschnitt (7) des zylindrischen Körpers (5) eingesetzt ist;
einen Stift (15), der drehbar in die Lagerbuchse (14) eingesetzt ist, um sich um die Längsachse (Y) zu drehen, wobei der Stift (15) ein erstes Ende (15a) für die Kupplung mit der Lagerbuchse (14) und ein zweites Ende (15b) aufweist, das entgegengesetzt zum ersten Ende (15a) und außerhalb der Lagerbuchse (14) angeordnet ist, sowie
ein Ringelement (18), verbunden mit dem zweiten Ende (15b) des Stifts (15), das mit einem Haken des Fahrzeugs (3) gekoppelt werden kann, um die Drehung um die erste vertikale Achse (X) zu erlauben.

9. Vorrichtung nach einem der vorhergehenden Ansprüche 7 bis 11, **dadurch gekennzeichnet, dass** das zweite Anschlussstück (13) einen ersten Abschnitt umfasst, der mit einem Ende des zweiten Rohrabschnitts (7), der entgegengesetzt zum ersten Anschlussstück (12) angeordnet ist, sowie einen zweiten Abschnitt, entgegengesetzt zum ersten und aufweisend eine Stange (24), die mit dem Anhänger (4) gekoppelt werden kann.

## Revendications

1. Dispositif de fixation du timon de remorque, comprenant :
- une premier joint de raccordement (12) pouvant être associé à un véhicule (3), le premier joint (12) tournant autour d'un premier axe vertical (X) se développant transversalement par rapport à la surface de support du véhicule (3) ainsi qu'autour d'un axe longitudinal (Y) parallèle à la direction de mouvement (A) du véhicule (3) ;
- un second joint de raccordement (13) opposé au premier joint (12) et pouvant être associé à une remorque (4) ;
- un corps de support (2) positionné entre les premier et second joints (12, 13) et associé à ceux-ci ;
le second joint de raccordement (13) étant un joint articulé tournant autour d'un axe horizontal (Z) se développant parallèlement au plan de support du véhicule (3) et de la remorque (4) et transversalement par rapport à la direction de mouvement (A) du véhicule (3) ; le second joint de raccordement (13) tournant aussi autour d'un second axe vertical (W) parallèle au premier axe vertical (X),
**caractérisé en ce que** le corps de support (2) possède des moyens de déplacement (8) permettant de faire passer le corps (2) d'une première condition de fonctionnement, dans laquelle le premier joint (12) peut tourner autour des axes correspondants (X, Y) et le second joint (13) est bloqué de sorte à ne pas tourner, à une seconde condition de fonctionnement, dans laquelle le premier joint (12) ne peut que tourner autour de l'axe horizontal (Y) avec le second joint (13) pouvant tourner autour des axes correspondants (Z, W).

2. Dispositif selon la revendication 1, **caractérisé en ce que** le second joint (13) est un joint de cardan.

3. Dispositif selon la revendication 1, **caractérisé en ce que** le corps de support (2) comprend un corps cylindrique creux à l'intérieur (5) ; le second joint (13) étant inséré à l'intérieur du corps cylindrique (5) dans la première condition de fonctionnement et étant positionné à l'extérieur du corps cylindrique (5) dans la seconde condition de fonctionnement.

4. Dispositif selon la revendication 3, **caractérisé en ce que** le corps cylindrique (5) possède une première et une seconde partie tubulaire (6, 7) accouplées de façon télescopique l'une à l'autre et pouvant coulisser réciproquement entre une position d'extension maximale correspondant à la première position de fonctionnement et dans laquelle la première partie (6) s'emboite sur le second joint (13) et une position de retrait correspondant à la seconde condition de fonctionnement et dans laquelle la seconde partie (7) se trouve à l'intérieur de la première partie tubulaire (6).

5. Dispositif selon la revendication 4, **caractérisé en ce que** les moyens de déplacement (8) comprennent un actionneur hydrodynamique (9) ayant un élément fixe (9a) associé à la première partie tubulaire (6) et un élément mobile (9b) pouvant coulisser axialement le long de l'extension longitudinale du corps cylindrique (5) et associé à la seconde partie tubulaire (7) à une extrémité externe.

6. Dispositif selon les revendications 4 ou 5, **caractérisé en ce qu'**il comprend aussi un élément d'arrêt (24) étant en prise extérieurement avec le corps cylindrique (5), l'élément d'arrêt (24), dans la seconde condition de fonctionnement, étant en contact avec le véhicule (3) pour empêcher la rotation du premier joint (12) autour du premier axe vertical (X).

7. Dispositif selon la revendication 6, **caractérisé en ce que** l'élément d'arrêt (24) comprend une paire de barres (25) reliées aux extrémités opposées de la première partie tubulaire (6) chacune d'elle ayant une extrémité de contact (25a) servant à interférer avec le véhicule (3) dans la seconde condition de fonctionnement du corps de support (2) ; le premier joint (12) du corps de support (2), dans la première condition de fonctionnement, étant éloigné des barres (25).

8. Dispositif selon l'une quelconque des revendications précédentes de 4 à 7, **caractérisé en ce que** le premier joint (12) comprend :
une bague (14) insérée pivotante dans la seconde partie tubulaire (7) du corps cylindrique (5) ;
un goujon (15) inséré pivotant dans la bague (14) pour tourner autour de l'axe longitudinal (Y), le goujon (15) ayant une première extrémité (15a) s'accouplant à la bague (14) et une seconde extrémité (15b) opposée à la première extrémité (15a) et positionnée à l'extérieur de la bague (14) ; et
un élément annulaire (18) associé à la seconde extrémité (15b) du goujon (15) pouvant être accouplé à un crochet d'un véhicule (3) pour permettre la rotation autour du premier axe vertical (X).

9. Dispositif selon l'une quelconque des revendications de 7 à 11, **caractérisé en ce que** le second joint (13) comprend une première partie reliée à une extrémité de la seconde partie tubulaire (7) opposée au premier joint (12) et une seconde partie opposée à la première et ayant une tige (24) pouvant être accouplée à la remorque (4).
